# EUROPEAN PATENT APPLICATION

(11) **EP 4 814 852 A1**
(43) Date of publication of application: **30.09.2026**
(21) Application number: 24893999.3
(22) Date of filing: 06.11.2024
(51) Int. Cl.: G06Q 50/04

(54) **WORK ASSISTANCE DEVICE, WORK ASSISTANCE METHOD, AND WORK ASSISTANCE PROGRAM**

(30) Priority: 24.11.2023 JP 2023199066
(71) Applicant: OMRON Corporation, Kyoto-shi, Kyoto 600-8530 (JP)
(72) Inventor: HASHIMOTO, Naoya, Kyoto-shi, Kyoto 600-8530 (JP); FUJIMOTO, Shinya, Kyoto-shi, Kyoto 600-8530 (JP); EGAMI, Shin, Kyoto-shi, Kyoto 600-8530 (JP); FUJIKI, Tsubasa, Kyoto-shi, Kyoto 600-8530 (JP)
(74) Representative: Mewburn Ellis LLP
(86) International application number: PCT/JP2024/039448
(87) International publication number: WO 2025/110007

(57) **Abstract**

A work assistance device includes: an information determination unit that determines information on a work instruction in a work procedure of work of a worker based on work state information for the work instruction of the worker and self-awareness information regarding the work of the worker; and an information presentation unit that presents the information on the work instruction determined by the information determination unit.

## Description

### TECHNICAL FIELD

The present disclosure relates to a work assistance device, a work assistance method, and a work assistance program for assisting the work of a worker.

### BACKGROUND ART

Various work assistance devices have conventionally been proposed that provide advice regarding work performed by a worker or regarding a result of work performed by the worker.

In this regard, Japanese Patent Laying-Open No. 2023-8625 (PTL 1) proposes a method for outputting contents of a work instruction according to proficiency information for each worker.

### CITATION LIST

### PATENT LITERATURE

PTL 1: Japanese Patent Laying-Open No. 2023-8625

### SUMMARY OF INVENTION

### TECHNICAL PROBLEM

On the other hand, there has been a problem that the contents of the work instruction are maintained even when the worker fails to understand the contents of the work instruction or when the worker feels that the work instruction is difficult.

The present disclosure has been made to solve the above problem. An object of the present disclosure is to provide a work assistance device, a work assistance method, and a work assistance program capable of providing a work instruction regarding work according to the situation of a worker.

### SOLUTION TO PROBLEM

A work assistance device according to an example of the present disclosure includes: an information determination unit that determines information on a work instruction in a work procedure of work of a worker based on work state information for the work instruction of the worker and self-awareness information regarding the work of the worker; and an information presentation unit that presents the information on the work instruction determined by the information determination unit. According to this configuration, since the information on the work instruction in the work procedure of the work of the worker is determined based on the self-awareness information regarding the work of the worker, the work instruction regarding the work can be provided according to the situation of the worker.

The work assistance device further includes: a work information acquisition unit that acquires work information of the worker; and an analysis unit that analyzes the work information of the worker acquired by the work information acquisition unit to generate work state information. According to this configuration, since the work state information is generated by analyzing the work information of the worker, the work instruction regarding the work can be provided according to the situation of the worker.

The work assistance device further includes a self-awareness information acquisition unit that acquires the self-awareness information regarding the work of the worker. According to this configuration, since the configuration includes the self-awareness information acquisition unit that acquires the self-awareness information, the information on the work instruction in the work procedure of the work of the worker can be determined based on the self-awareness information regarding the work of the worker, thus providing the work instruction regarding the work according to the situation of the worker.

The work assistance device includes an information storage unit that stores a plurality of work instruction contents that are the information on the work instruction. The plurality of work instruction contents are classified into a plurality of work instruction content groups. The information determination unit determines one of the plurality of work instruction content groups based on the work state information and the self-awareness information, and determines one of the plurality of work instruction contents in the determined work instruction content group. According to this configuration, since one work instruction content is determined from the plurality of work instruction contents included in one work instruction content group among the plurality of work instruction content groups, the work instruction regarding the work can be provided according to the situation of the worker.

The work assistance device further includes an information reception unit that receives input of the self-awareness information of the worker. According to this configuration, since the configuration includes the information reception unit that receives the input of the self-awareness information, the work instruction regarding the work can be provided according to the situation of the worker in a simple scheme.

The self-awareness information of the worker is information regarding whether or not the work instruction is understood. According to this configuration, since the self-awareness information is the information regarding whether or not the work instruction is understood, the work instruction regarding the work can be provided according to the situation of the worker.

The self-awareness information of the worker is information regarding whether or not work following the work instruction is appropriate. According to this configuration, since the self-awareness information is the information regarding whether or not the work following the work instruction is appropriate, the work instruction regarding the work can be provided according to the situation of the worker.

A work assistance method according to an example of the present disclosure includes: determining information on a work instruction in a work procedure of work of a worker based on work state information for the work instruction of the worker and self-awareness information regarding the work of the worker; and presenting the determined information on the work instruction.

A work assistance program for causing a computer to perform a work assistance method according to an example of the present disclosure, the work assistance method including: determining information on a work instruction in a work procedure of work of a worker based on work state information for the work instruction of the worker and self-awareness information regarding the work of the worker; and presenting the determined information on the work instruction.

### ADVANTAGEOUS EFFECTS OF INVENTION

According to the work assistance device, the work assistance method, and the work assistance program of the present disclosure, the work instruction regarding the work can be provided according to the situation of the worker.

### BRIEF DESCRIPTION OF DRAWINGS

Fig. 1 is a diagram illustrating a configuration of a work assistance system 1 according to an embodiment.
Fig. 2 is a diagram illustrating a case where a worker performs screw tightening work with a screwdriver DR according to the embodiment.
Fig. 3 is a diagram illustrating a configuration of a server 20 according to the embodiment.
Fig. 4 is a diagram illustrating functional blocks of server 20 according to the embodiment.
Fig. 5 is a flowchart illustrating processing of server 20 according to the embodiment.
Fig. 6 is a content determination transition diagram according to the embodiment.
Fig. 7 is a diagram illustrating determination of work instruction content of a first work instruction content group according to the embodiment.
Fig. 8 is a diagram illustrating determination of work instruction content of a second work instruction content group according to the embodiment.
Fig. 9 is a diagram illustrating determination of work instruction content of a third work instruction content group according to the embodiment.

### DESCRIPTION OF EMBODIMENTS

An embodiment of the present invention will be described in detail with reference to the drawings. The same or corresponding elements of the drawings have the same reference characters allotted, and description thereof will not be repeated.

### (Overall Configuration)

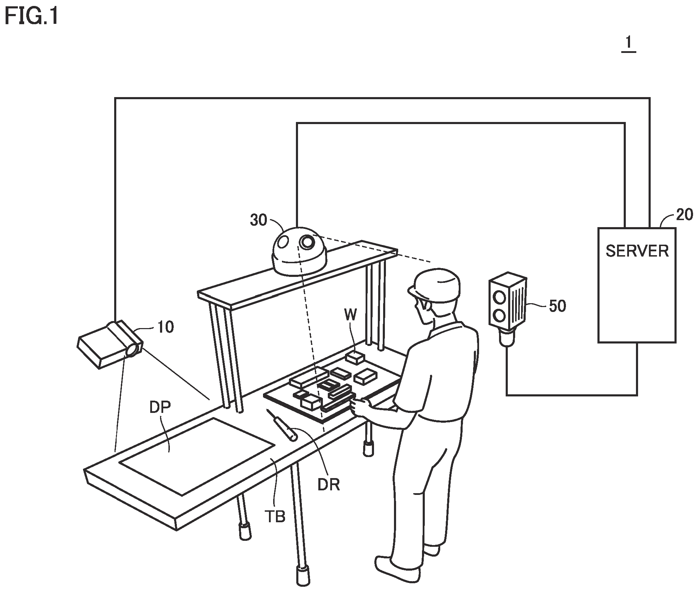

A configuration of a work assistance system 1 according to the embodiment will be described. Fig. 1 is a diagram illustrating the configuration of work assistance system 1 according to the embodiment. Referring to Fig. 1, work assistance system 1 includes a projector 10, a server 20, a camera 30, and an input device 50. Projector 10, camera 30, and input device 50 are each connected to server 20. The worker, by way of example, performs predetermined work on a workpiece W arranged on a workbench TB with a screwdriver DR. This example will describe, as an example of the predetermined work, a case where the worker performs screw tightening work on workpiece W with screwdriver DR. A case where the screw tightening work on workpiece W is repeatedly performed will be described. Although not shown, screwdriver DR is provided with a tilt sensor, which will be described later. Also, although not shown, workbench TB is provided with a pressure sensor. The tilt sensor and the pressure sensor are provided so as to communicate with server 20.

Projector 10, by way of example, projects (outputs) information on a work instruction of the predetermined work to a projection area DP of part of workbench TB. Camera 30 captures a predetermined work state of the worker, and outputs the captured image data to server 20 as work information. Input device 50 is a device that inputs self-awareness information regarding work of the worker. By way of example, input device 50 is provided with switch-type buttons. Input device 50 is provided to be able to receive input of information regarding self-awareness of the worker. For example, input device 50 is provided to be able to selectively receive input of information regarding whether or not work following the work instruction is appropriate as the self-awareness information. For example, the worker inputs the self-awareness information regarding the predetermined work for each predetermined work via input device 50. The worker presses one switch of two switches provided in input device 50 when determining that the predetermined work following the work instruction has been performed as the self-awareness information. Thus, the self-awareness information (work is appropriate) of the worker is transmitted to server 20 via input device 50. In addition, the worker presses the other switch of the two switches provided in input device 50 when determining that the predetermined work following the work instruction has not been performed as the self-awareness information. Thus, the self-awareness information (work is inappropriate) of the worker is transmitted to server 20 via input device 50.

Server 20 acquires the captured image data input via camera 30 and/or data input via screwdriver DR as the work information, determines the information on the work instruction in the work procedure of the work of the worker based on work state information acquired by analysis and the self-awareness information input via input device 50, and presents the determined information on the work instruction. For example, server 20 presents the information on the work instruction determined via projector 10.

This example will describe a case where the worker performs the screw tightening work on workpiece W with screwdriver DR by way of example, but the present disclosure is not limited thereto, and any other work may be performed. In addition, a scheme using screwdriver DR will be described by way of example, but a scheme not using screwdriver DR may be adopted. This example will describe a case where projector 10 is used to project (output) the information on the work instruction of the predetermined work to projection area DP by way of example, but the present disclosure is not limited thereto, and for example, a display device may be used instead of projector 10 to present the information on the work instruction of the predetermined work to the worker. Further, this example will describe a case where the information on the work instruction of the predetermined work is visually presented, but for example, the information may be presented to the worker by voice using a speaker. Alternatively, the speaker and projector 10 may be used in combination.

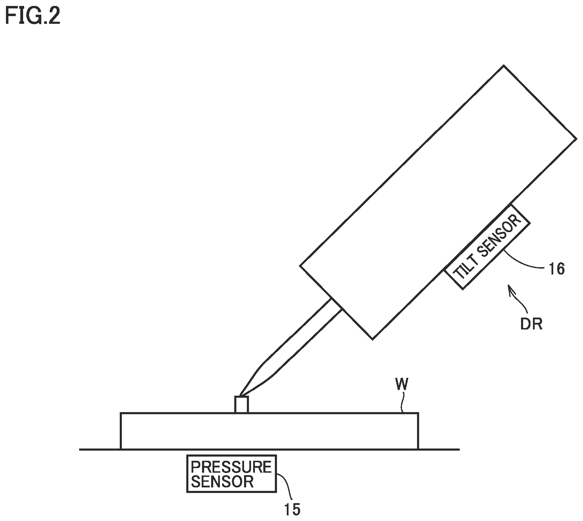

Fig. 2 is a diagram illustrating a case where the worker performs the screw tightening work with screwdriver DR according to the embodiment. Referring to Fig. 2, screwdriver DR is provided with a tilt sensor 16. Tilt sensor 16, which is composed of, for example, an acceleration sensor or a gyro sensor, continuously detects a tilt angle of a cutting edge member of screwdriver DR with respect to workpiece W, and transmits data representing the detected tilt angle to server 20. Tilt sensor 16 is provided with a wireless communication function capable of communicating with server 20. For example, an interface adopting a low-power data communication standard, such as Bluetooth (registered trademark), is used as a wireless interface. Note that instead of the wireless interface, a wired communication line such as a wired local area network (LAN) can be used, and a power cord can also be used as a communication line.

By way of example, workbench TB is provided with a pressure sensor 15. Pressure sensor 15, which continuously detects a pressure (load) applied to workpiece W via the cutting edge member of screwdriver DR, transmits data representing the detected pressure value to server 20. Pressure sensor 15 is provided with a wireless communication function capable of communicating with server 20. For example, an interface adopting a low-power data communication standard, such as Bluetooth (registered trademark), is used as a wireless interface. Note that instead of the wireless interface, a wired communication line such as a wired local area network (LAN) can be used, and a power cord can also be used as a communication line. Note that at least one of pressure sensor 15 and tilt sensor 16 may be provided in screwdriver DR.

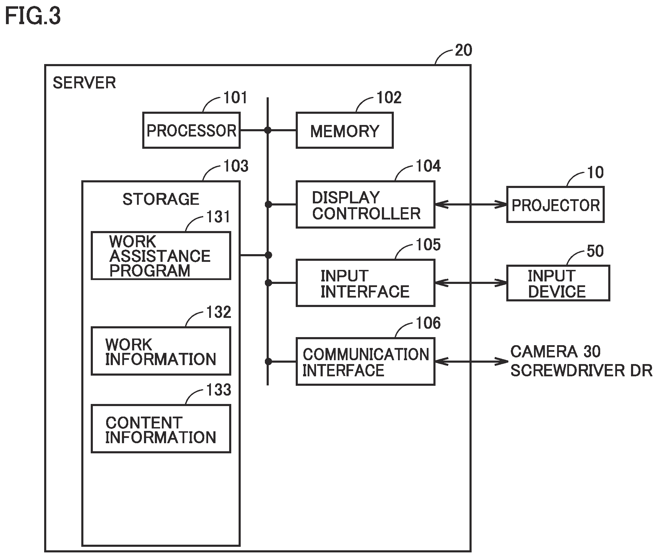

Fig. 3 is a diagram illustrating a configuration of server 20 according to the embodiment. Referring to Fig. 3, server 20 typically has a structure according to a general-purpose computer architecture. Specifically, server 20 includes a processor 101 such as a central processing unit (CPU) or a micro-processing unit (MPU), a memory 102, a storage 103, a display controller 104, an input interface 105, and a communication interface 106. These units are connected to each other via a bus so as to be able to perform data communication. Processor 101 loads various programs stored in storage 103 into memory 102 for execution, realizing various processing according to the present embodiment. Memory 102, which is typically a volatile storage device such as a dynamic random access memory (DRAM), stores programs and the like read from storage 103. Storage 103 is typically a non-volatile magnetic storage device such as a hard disk drive. Storage 103 stores a work assistance program 131 executed by processor 101. Storage 103 also stores work information 132 and content information 133. Work information 132 is data regarding a work state for the work instruction of the worker, which is transmitted from camera 30, pressure sensor 15, and tilt sensor 16 and received via communication interface 106. Content information 133 is information on a work instruction of predetermined work stored in advance.

Various programs installed in storage 103 are distributed while being stored in a memory card or the like. Display controller 104 is connected to projector 10, and outputs signals for displaying various information to projector 10 in accordance with internal commands from processor 101. Input interface 105 is connected to input device 50 and receives the self-awareness information of the worker input via input device 50. Although not shown, input interface 105 may mediate data transmission from input devices such as a keyboard, a mouse, a touch panel, and a dedicated console. Communication interface 106 mediates data transmission between processor 101 and external devices (e.g., camera 30, pressure sensor 15, and tilt sensor 16). Communication interface 106 typically includes Ethernet (registered trademark), universal serial bus (USB), or the like. Note that various programs stored in storage 103 may be downloaded from a distribution server or the like via communication interface 106.

When utilizing a computer having a structure according to the general-purpose computer architecture as described above, an operating system (OS) for providing basic functions of the computer may be installed in addition to an application for providing functions according to the present embodiment. In this case, the program according to the present embodiment may be one that performs processing by calling necessary modules among program modules provided as part of the OS in a predetermined order and timing. In other words, the program according to the present embodiment itself does not include the modules as described above, and processing may be performed in cooperation with the OS. Note that, alternatively, some or all of the functions provided by execution of work assistance program 131 may be implemented as a dedicated hardware circuit.

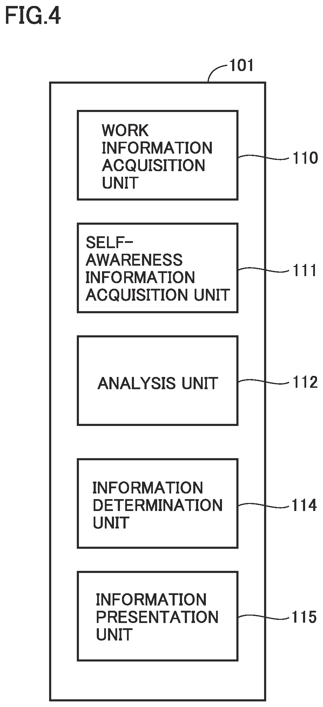

Fig. 4 is a diagram illustrating functional blocks of server 20 according to the embodiment. Referring to Fig. 4, server 20 constitutes a work assistance device and includes a work information acquisition unit 110, a self-awareness information acquisition unit 111, an analysis unit 112, an information determination unit 114, and an information presentation unit 115. Each functional block is realized by processor 101 executing work assistance program 131.

Work information acquisition unit 110 acquires image data from camera 30 as work information and stores the image data in storage 103 as work information 132. Work information acquisition unit 110 acquires wireless signals from pressure sensor 15 and tilt sensor 16 as work information. Work information acquisition unit 110 acquires the wireless signals transmitted from pressure sensor 15 and tilt sensor 16, decodes the signals, acquires pressure data and tilt data for workpiece W, and stores the pieces of data in storage 103 as work information 132. Self-awareness information acquisition unit 111 acquires the self-awareness information of the worker input via input device 50. Analysis unit 112 analyzes work information 132 based on work information 132 stored in storage 103 to generate work state information for the work instruction of the worker. Specifically, analysis unit 112 analyzes work information 132 that is tilt data of the work state of the worker transmitted from tilt sensor 16 to generate, as the work state information, an analysis result indicating whether or not screwdriver DR is held straight with respect to the screw. Analysis unit 112 analyzes work information 132 that is image data of the work state of the worker input via camera 30 to generate, as the work state information, an analysis result indicating whether or not screwdriver DR is held so as not to strain the wrist, that is, whether or not the wrist is bent. Analysis unit 112 analyzes work information 132 that is pressure data of the work state of the worker transmitted from pressure sensor 15 to generate, as the work state information, an analysis result indicating whether or not screwdriver DR is pressed with a strong force.

Information determination unit 114 determines information on a work instruction in a work procedure of work of the worker based on the work state information for the work instruction of the worker, which is the analysis result of analysis unit 112, and the self-awareness information regarding the work of the worker. Specifically, information determination unit 114 determines the information on the work instruction according to a content determination transition diagram, which will be described later.

Information presentation unit 115 presents the information on the work instruction determined by information determination unit 114. Specifically, information presentation unit 115 projects (outputs) the determined work instruction content to projection area DP via projector 10.

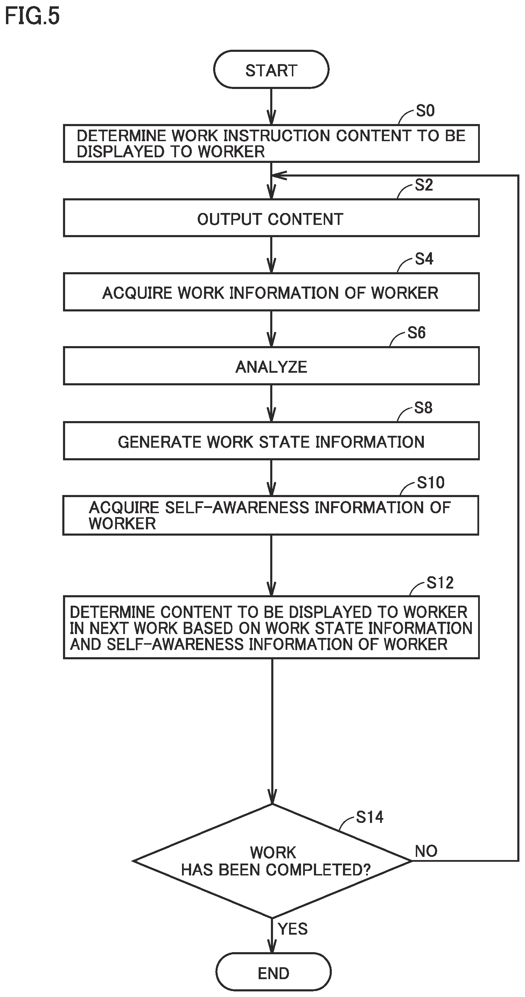

Fig. 5 is a flowchart illustrating processing of server 20 according to the embodiment. Referring to Fig. 5, server 20 determines work instruction content to be displayed to the worker (step S0). Specifically, information determination unit 114 determines the work instruction content in the work procedure of the work to be displayed to the worker. Information determination unit 114 determines content of a preset initial state as an example. Information determination unit 114 determines a content D1 of a first work instruction content group corresponding to a state N1 in the content determination transition diagram, which will be described later. Server 20 then outputs the content (step S2). Information presentation unit 115 projects (outputs) the determined content to projection area DP via projector 10.

Server 20 then acquires work information of the worker (step S4). Specifically, work information acquisition unit 110 decodes image data from camera 30 and wireless signals transmitted from pressure sensor 15 and tilt sensor 16 to acquire pressure data and tilt data as the work information. Server 20 then analyzes the acquired work information of the worker (step S6). Specifically, analysis unit 112 analyzes the work information stored in storage 103. Server 20 then generates work state information that is an analysis result (step S8). Specifically, analysis unit 112 analyzes the work information that is the tilt data of the work state of the worker transmitted from tilt sensor 16 to generate, as the work state information, an analysis result indicating whether or not screwdriver DR is held straight with respect to the screw. Analysis unit 112 analyzes the work information that is the image data of the work state of the worker input via camera 30 to generate, as the work state information, an analysis result indicating whether or not screwdriver DR is held so as not to strain the wrist, that is, whether or not the wrist is bent. Analysis unit 112 analyzes work information 132 that is the pressure data of the work state of the worker transmitted from pressure sensor 15 to generate, as the work state information, an analysis result indicating whether or not screwdriver DR is pressed with a strong force.

Server 20 then acquires the self-awareness information of the worker (step S10). Specifically, self-awareness information acquisition unit 111 acquires the self-awareness information of the worker input via input device 50. Server 20 then determines content to be displayed to the worker in the next work based on the work state information and the self-awareness information of the worker (step S12). Specifically, information determination unit 114 determines the information on the work instruction based on the work state information and the self-awareness information of the worker using the content determination transition diagram, which will be described later.

Server 20 then determines whether or not work has been completed (step S14). In step S14, when determining that the work has been completed (YES in step S14), server 20 terminates the processing (END). For example, server 20 may determine, based on the image data from camera 30, that the work has been completed when the worker has left workbench TB. Alternatively, server 20 may determine that the work has been completed when there is no workpiece W.

In contrast, when determining that the work has not been completed (NO in step S14), server 20 returns to step S2 and outputs the content (step S2). Information presentation unit 115 projects (outputs) the determined content to projection area DP via projector 10, and repeats the above processing. For example, when the worker has gripped a new workpiece W, server 20 may determine, based on the image data from camera 30, that it is the next work, determine that the work has not been completed, and output the content. Alternatively, server 20 may detect input of a switch for starting the next work and output the content according to the detection.

### (Determination of Content)

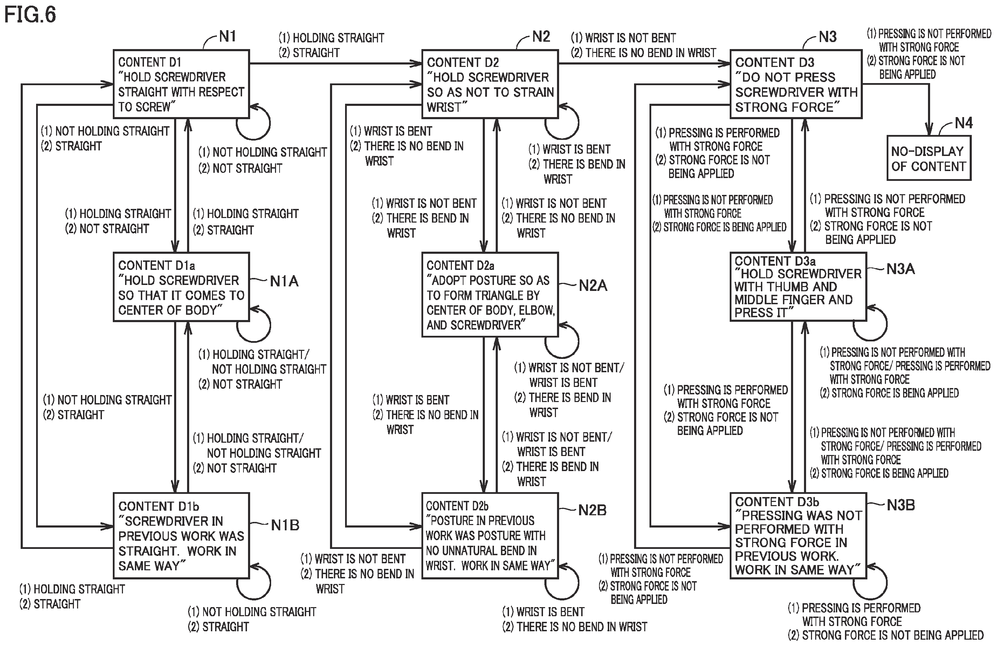

Fig. 6 is a content determination transition diagram according to the embodiment. Referring to Fig. 6, the content information includes a plurality of work instruction contents. Specifically, the plurality of work instruction contents are classified into three first to third work instruction content groups, by way of example. The work instruction content determined in the content determination transition diagram transitions from the first work instruction content group to the second work instruction content group according to proficiency of the worker. Further, the work instruction content determined in the content determination transition diagram transitions from the second work instruction content group to the third work instruction content group according to proficiency of the worker.

The first work instruction content group includes work instruction contents D1, D1a, D1b (also simply referred to as contents). The second work instruction content group includes work instruction contents D2, D2a, D2b. The third work instruction content group includes work instruction contents D3, D3a, D3b.

Information determination unit 114 determines one of the first to third work instruction content groups, and determines one from among the plurality of work instruction contents in the determined work instruction content group. Information presentation unit 115 presents the determined work instruction content to the worker as information on the next work instruction.

### (First Work Instruction Content Group)

As an initial state, it is assumed that the first work instruction content group is selected and work instruction content D1 of the first work instruction content group is determined. In other words, the initial state in the content determination transition diagram is state N1.

The worker checks information on the work instruction in the work procedure of work instruction content D1 "HOLD SCREWDRIVER STRAIGHT WITH RESPECT TO SCREW", and starts work.

Work information acquisition unit 110 acquires, as work information, tilt data of the work state of the worker input via screwdriver DR. Analysis unit 112 analyzes whether or not screwdriver DR is held straight with respect to the screw using the tilt data. Analysis unit 112 generates, based on the work information, work state information ("STRAIGHT" or "NOT STRAIGHT") that is an analysis result of whether or not the screwdriver is straight, and outputs the work state information to information determination unit 114. Self-awareness information acquisition unit 111 acquires the self-awareness information of the worker input via input device 50. The worker inputs the self-awareness information regarding the predetermined work for each predetermined work via input device 50. The worker presses one or the other switch of the two switches provided in input device 50 when determining that the predetermined work following the work instruction is appropriate or inappropriate as the self-awareness information. Self-awareness information acquisition unit 111 acquires the self-awareness information of the worker for the work instruction in the work procedure of work instruction content D1 "HOLD SCREWDRIVER STRAIGHT WITH RESPECT TO SCREW" via input device 50. By way of example, self-awareness information acquisition unit 111 acquires the self-awareness information ("HOLDING STRAIGHT" or "NOT HOLDING STRAIGHT") of the worker according to pressing of one or the other switch of the two switches.

When the state is state N1, information determination unit 114 causes transition from state N1 to a state N2 based on the self-awareness information ((1) "HOLDING STRAIGHT") and the work state information ((2) "STRAIGHT") that is the analysis result of analysis unit 112. Information determination unit 114 determines the second work instruction content group corresponding to state N2, and determines work instruction content D2 ("HOLD SCREWDRIVER SO AS NOT TO STRAIN WRIST") of the second work instruction content group. Information presentation unit 115 presents the determined work instruction content D2 to the worker as information on the next work instruction. When the state is state N1, information determination unit 114 maintains state N1 based on the self-awareness information ((1) "NOT HOLDING STRAIGHT") and the work state information ((2) "NOT STRAIGHT") that is the analysis result of analysis unit 112. Information determination unit 114 determines the first work instruction content group corresponding to state N1, and determines work instruction content D1 ("HOLD SCREWDRIVER STRAIGHT WITH RESPECT TO SCREW") of the first work instruction content group. Information presentation unit 115 presents the determined work instruction content D1 to the worker as information on the next work instruction.

When the state is state N1, information determination unit 114 causes transition from state N1 to a state N1A based on the self-awareness information ((1) "HOLDING STRAIGHT") and the work state information ((2) "NOT STRAIGHT") that is the analysis result of analysis unit 112. Information determination unit 114 determines the first work instruction content group corresponding to state N1A, and determines work instruction content D1a ("HOLD SCREWDRIVER SO THAT IT COMES TO CENTER OF BODY") of the first work instruction content group. Information presentation unit 115 presents the determined work instruction content D1a to the worker as information on the next work instruction. When the state is state N1, information determination unit 114 causes transition from state N1 to a state N1B based on the self-awareness information ((1) "NOT HOLDING STRAIGHT") and the work state information ((2) "STRAIGHT") that is the analysis result of analysis unit 112. Information determination unit 114 determines the first work instruction content group corresponding to state N1B, and determines work instruction content D1b ("SCREWDRIVER IN PREVIOUS WORK WAS STRAIGHT. WORK IN SAME WAY") of the first work instruction content group. Information presentation unit 115 presents the determined work instruction content D1b to the worker as information on the next work instruction.

When the state is state N1A, information determination unit 114 maintains state N1A based on the self-awareness information ((1) "HOLDING STRAIGHT" or "NOT HOLDING STRAIGHT") and the work state information ((2) "NOT STRAIGHT") that is the analysis result of analysis unit 112. Information determination unit 114 determines the first work instruction content group corresponding to state N1A, and determines work instruction content D1a ("HOLD SCREWDRIVER SO THAT IT COMES TO CENTER OF BODY") of the first work instruction content group. Information presentation unit 115 presents the determined work instruction content D1a to the worker as information on the next work instruction. When the state is state N1A, information determination unit 114 causes transition from state N1A to state N1B based on the self-awareness information ((1) "NOT HOLDING STRAIGHT") and the work state information ((2) "STRAIGHT") that is the analysis result of analysis unit 112. Information determination unit 114 determines the first work instruction content group corresponding to state N1B, and determines work instruction content D1b ("SCREWDRIVER IN PREVIOUS WORK WAS STRAIGHT. WORK IN SAME WAY") of the first work instruction content group. Information presentation unit 115 presents the determined work instruction content D1b to the worker as information on the next work instruction.

When the state is state N1A, information determination unit 114 causes transition from state N1A to state N1 based on the self-awareness information ((1) "HOLDING STRAIGHT") and the work state information ((2) "STRAIGHT") that is the analysis result of analysis unit 112. Information determination unit 114 determines the first work instruction content group corresponding to state N1, and determines work instruction content D1 ("HOLD SCREWDRIVER STRAIGHT WITH RESPECT TO SCREW") of the first work instruction content group. Information presentation unit 115 presents the determined work instruction content D1 to the worker as information on the next work instruction.

When the state is state N1B, information determination unit 114 maintains state N1B based on the self-awareness information ((1) "NOT HOLDING STRAIGHT") and the work state information ((2) "STRAIGHT") that is the analysis result of analysis unit 112. Information determination unit 114 determines the first work instruction content group corresponding to state N1B, and determines work instruction content D1b ("SCREWDRIVER IN PREVIOUS WORK WAS STRAIGHT. WORK IN SAME WAY") of the first work instruction content group. Information presentation unit 115 presents the determined work instruction content D1b to the worker as information on the next work instruction. When the state is state N1B, information determination unit 114 causes transition from state N1B to state N1A based on the self-awareness information ((1) "HOLDING STRAIGHT" or "NOT HOLDING STRAIGHT") and the work state information ((2) "NOT STRAIGHT") that is the analysis result of analysis unit 112. Information determination unit 114 determines the first work instruction content group corresponding to state N1A, and determines work instruction content D1a ("HOLD SCREWDRIVER SO THAT IT COMES TO CENTER OF BODY") of the first work instruction content group. Information presentation unit 115 presents the determined work instruction content D1a to the worker as information on the next work instruction.

When the state is state N1B, information determination unit 114 causes transition from state N1B to state N1 based on the self-awareness information ((1) "HOLDING STRAIGHT") and the work state information ((2) "STRAIGHT") that is the analysis result of analysis unit 112. Information determination unit 114 determines the first work instruction content group corresponding to state N1, and determines work instruction content D1 ("HOLD SCREWDRIVER STRAIGHT WITH RESPECT TO SCREW") of the first work instruction content group. Information presentation unit 115 presents the determined work instruction content D1 to the worker as information on the next work instruction.

### (Second Work Instruction Content Group)

The worker checks information on the work instruction in the work procedure of work instruction content D2 "HOLD SCREWDRIVER SO AS NOT TO STRAIN WRIST" corresponding to state N2, and starts work.

Work information acquisition unit 110 acquires, as work information, image data of the work state of the worker input via camera 30. Analysis unit 112 analyzes whether or not the wrist is bent in the screw tightening work process using the image data. Analysis unit 112 generates, based on the work information, work state information ("THERE IS BEND IN WRIST" or "THERE IS NO BEND IN WRIST") that is an analysis result of whether or not the screwdriver is held so as not to strain the wrist, and outputs the work state information to information determination unit 114. Self-awareness information acquisition unit 111 acquires the self-awareness information of the worker input via input device 50. The worker inputs the self-awareness information regarding the predetermined work for each predetermined work via input device 50. The worker presses one or the other switch of the two switches provided in input device 50 when determining, as self-awareness information, that the predetermined work following the work instruction has been performed or has not been performed. Self-awareness information acquisition unit 111 acquires the self-awareness information of the worker for the work instruction in the work procedure of work instruction content D2 "HOLD SCREWDRIVER SO AS NOT TO STRAIN WRIST" via input device 50. By way of example, self-awareness information acquisition unit 111 acquires the self-awareness information ("WRIST IS BENT" or "WRIST IS NOT BENT") of the worker according to pressing of one or the other switch of the two switches.

When the state is state N2, information determination unit 114 causes transition from state N2 to a state N3 based on the self-awareness information ((1) "WRIST IS NOT BENT") and the work state information ((2) "THERE IS NO BEND IN WRIST") that is the analysis result of analysis unit 112. Information determination unit 114 determines the third work instruction content group corresponding to state N3, and determines work instruction content D3 ("DO NOT PRESS SCREWDRIVER WITH STRONG FORCE") of the third work instruction content group. Information presentation unit 115 presents the determined work instruction content D3 to the worker as information on the next work instruction. When the state is state N2, information determination unit 114 maintains state N2 based on the self-awareness information ((1) "WRIST IS BENT") and the work state information ((2) "THERE IS BEND IN WRIST") that is the analysis result of analysis unit 112. Information determination unit 114 determines the second work instruction content group corresponding to state N2, and determines work instruction content D2 ("HOLD SCREWDRIVER SO AS NOT TO STRAIN WRIST") of the second work instruction content group. Information presentation unit 115 presents the determined work instruction content D2 to the worker as information on the next work instruction.

When the state is state N2, information determination unit 114 causes transition from state N2 to a state N2A based on the self-awareness information ((1) "WRIST IS NOT BENT") and the work state information ((2) "THERE IS BEND IN WRIST") that is the analysis result of analysis unit 112. Information determination unit 114 determines the second work instruction content group corresponding to state N2A, and determines work instruction content D2a ("ADOPT POSTURE SO AS TO FORM TRIANGLE BY CENTER OF BODY, ELBOW, AND SCREWDRIVER") of the second work instruction content group. Information presentation unit 115 presents the determined work instruction content D2a to the worker as information on the next work instruction. When the state is state N2, information determination unit 114 causes transition from state N2 to a state N2B based on the self-awareness information ((1) "WRIST IS BENT") and the work state information ((2) "THERE IS NO BEND IN WRIST") that is the analysis result of analysis unit 112. Information determination unit 114 determines the second work instruction content group corresponding to state N2B, and determines work instruction content D2b ("POSTURE IN PREVIOUS WORK WAS POSTURE WITH NO BEND IN WRIST. WORK IN SAME WAY") of the second work instruction content group. Information presentation unit 115 presents the determined work instruction content D2b to the worker as information on the next work instruction.

When the state is state N2A, information determination unit 114 maintains state N2A based on the self-awareness information ((1) "WRIST IS NOT BENT" or "WRIST IS BENT") and the work state information ((2) "THERE IS BEND IN WRIST") that is the analysis result of analysis unit 112. Information determination unit 114 determines the second work instruction content group corresponding to state N2A, and determines work instruction content D2a ("ADOPT POSTURE SO AS TO FORM TRIANGLE BY CENTER OF BODY, ELBOW, AND SCREWDRIVER") of the second work instruction content group. Information presentation unit 115 presents the determined work instruction content D2a to the worker as information on the next work instruction. When the state is state N2A, information determination unit 114 causes transition from state N2A to state N2B based on the self-awareness information ((1) "WRIST IS BENT") and the work state information ((2) "THERE IS NO BEND IN WRIST") that is the analysis result of analysis unit 112. Information determination unit 114 determines the second work instruction content group corresponding to state N2B, and determines work instruction content D2b ("POSTURE IN PREVIOUS WORK WAS POSTURE WITH NO BEND IN WRIST. WORK IN SAME WAY") of the second work instruction content group. Information presentation unit 115 presents the determined work instruction content D2b to the worker as information on the next work instruction.

When the state is state N2A, information determination unit 114 causes transition from state N2A to state N2 based on the self-awareness information ((1) "WRIST IS NOT BENT") and the work state information ((2) "THERE IS NO BEND IN WRIST") that is the analysis result of analysis unit 112. Information determination unit 114 determines the second work instruction content group corresponding to state N2, and determines work instruction content D2 ("HOLD SCREWDRIVER SO AS NOT TO STRAIN WRIST") of the second work instruction content group. Information presentation unit 115 presents the determined work instruction content D2 to the worker as information on the next work instruction.

When the state is state N2B, information determination unit 114 maintains state N2B based on the self-awareness information ((1) "WRIST IS BENT") and the work state information ((2) "THERE IS NO BEND IN WRIST") that is the analysis result of analysis unit 112. Information determination unit 114 determines the second work instruction content group corresponding to state N2B, and determines work instruction content D2b ("POSTURE IN PREVIOUS WORK WAS POSTURE WITH NO BEND IN WRIST. WORK IN SAME WAY") of the second work instruction content group. Information presentation unit 115 presents the determined work instruction content D2b to the worker as information on the next work instruction. When the state is state N2B, information determination unit 114 causes transition from state N2B to state N2A based on the self-awareness information ((1) "WRIST IS NOT BENT" or "WRIST IS BENT") and the work state information ((2) "THERE IS BEND IN WRIST") that is the analysis result of analysis unit 112. Information determination unit 114 determines the second work instruction content group corresponding to state N2A, and determines work instruction content D2a ("ADOPT POSTURE SO AS TO FORM TRIANGLE BY CENTER OF BODY, ELBOW, AND SCREWDRIVER") of the second work instruction content group. Information presentation unit 115 presents the determined work instruction content D2a to the worker as information on the next work instruction.

When the state is state N2B, information determination unit 114 causes transition from state N2B to state N2 based on the self-awareness information ((1) "WRIST IS NOT BENT") and the work state information ((2) "THERE IS NO BEND IN WRIST") that is the analysis result of analysis unit 112. Information determination unit 114 determines the second work instruction content group corresponding to state N2, and determines work instruction content D2 ("HOLD SCREWDRIVER SO AS NOT TO STRAIN WRIST") of the second work instruction content group. Information presentation unit 115 presents the determined work instruction content D2 to the worker as information on the next work instruction.

### (Third Work Instruction Content Group)

The worker checks information on the work instruction in the work procedure of work instruction content D3 "DO NOT PRESS SCREWDRIVER WITH STRONG FORCE" corresponding to state N3, and starts work.

Work information acquisition unit 110 acquires pressure data of the work state of the worker input via screwdriver DR as work information. Analysis unit 112 analyzes whether or not the worker is pressing screwdriver DR with a strong force using the pressure data. Analysis unit 112 generates, based on the work information, work state information ("STRONG FORCE IS NOT BEING APPLIED" or "STRONG FORCE IS BEING APPLIED") that is an analysis result of whether or not the screwdriver is pressed with a strong force, and outputs the work state information to information determination unit 114. Self-awareness information acquisition unit 111 acquires the self-awareness information of the worker input via input device 50. The worker inputs the self-awareness information regarding the predetermined work for each predetermined work via input device 50. The worker presses one or the other switch of the two switches provided in input device 50 when determining that the predetermined work following the work instruction has been performed or has not been performed. Self-awareness information acquisition unit 111 acquires the self-awareness information of the worker for the work instruction in the work procedure of work instruction content D3 "DO NOT PRESS SCREWDRIVER WITH STRONG FORCE" via input device 50. By way of example, self-awareness information acquisition unit 111 acquires the self-awareness information ("PRESSING IS BEING PERFORMED WITH STRONG FORCE" or "PRESSING IS NOT BEING PERFORMED WITH STRONG FORCE") of the worker according to pressing of one or the other switch of the two switches.

When the state is state N3, information determination unit 114 causes transition from state N3 to a state N4 based on the self-awareness information ((1) "PRESSING IS NOT BEING PERFORMED WITH STRONG FORCE") and the work state information ((2) "STRONG FORCE IS NOT BEING APPLIED") that is the analysis result of analysis unit 112. Information determination unit 114 determines non-display of content as state N4. Information presentation unit 115 does not present information on the next work instruction to the worker. When the state is state N3, information determination unit 114 maintains state N3 based on the self-awareness information ((1) "PRESSING IS BEING PERFORMED WITH STRONG FORCE") and the work state information ((2) "STRONG FORCE IS BEING APPLIED") that is the analysis result of analysis unit 112. Information determination unit 114 determines the third work instruction content group corresponding to state N3, and determines work instruction content D3 ("DO NOT PRESS SCREWDRIVER WITH STRONG FORCE") of the third work instruction content group. Information presentation unit 115 presents the determined work instruction content D3 to the worker as information on the next work instruction.

When the state is state N3, information determination unit 114 causes transition from state N3 to a state N3A based on the self-awareness information ((1) "PRESSING IS NOT BEING PERFORMED WITH STRONG FORCE") and the work state information ((2) "STRONG FORCE IS BEING APPLIED") that is the analysis result of analysis unit 112. Information determination unit 114 determines the third work instruction content group corresponding to state N3A, and determines work instruction content D3a ("HOLD SCREWDRIVER WITH THUMB AND MIDDLE FINGER AND PRESS IT") of the third work instruction content group. Information presentation unit 115 presents the determined work instruction content D3a to the worker as information on the next work instruction. When the state is state N3, information determination unit 114 causes transition from state N3 to a state N3B based on the self-awareness information ((1) "PRESSING IS BEING PERFORMED WITH STRONG FORCE") and the work state information ((2) "STRONG FORCE IS NOT BEING APPLIED") that is the analysis result of analysis unit 112. Information determination unit 114 determines the third work instruction content group corresponding to state N3B, and determines work instruction content D3b ("PRESSING WAS NOT PERFORMED WITH STRONG FORCE IN PREVIOUS WORK. WORK IN SAME WAY") of the third work instruction content group. Information presentation unit 115 presents the determined work instruction content D3b to the worker as information on the next work instruction.

When the state is state N3A, information determination unit 114 maintains state N3A based on the self-awareness information ((1) "PRESSING IS BEING PERFORMED WITH STRONG FORCE" or "PRESSING IS NOT BEING PERFORMED WITH STRONG FORCE") and the work state information ((2) "STRONG FORCE IS BEING APPLIED") that is the analysis result of analysis unit 112. Information determination unit 114 determines the third work instruction content group corresponding to state N3A, and determines work instruction content D3a ("HOLD SCREWDRIVER WITH THUMB AND MIDDLE FINGER AND PRESS IT") of the third work instruction content group. Information presentation unit 115 presents the determined work instruction content D3a to the worker as information on the next work instruction. When the state is state N3A, information determination unit 114 causes transition from state N3A to state N3B based on the self-awareness information ((1) "PRESSING IS BEING PERFORMED WITH STRONG FORCE") and the work state information ((2) "STRONG FORCE IS NOT BEING APPLIED") that is the analysis result of analysis unit 112. Information determination unit 114 determines the third work instruction content group corresponding to state N3B, and determines work instruction content D3b ("PRESSING WAS NOT PERFORMED WITH STRONG FORCE IN PREVIOUS WORK. WORK IN SAME WAY") of the third work instruction content group. Information presentation unit 115 presents the determined work instruction content D3b to the worker as information on the next work instruction.

When the state is state N3A, information determination unit 114 causes transition from state N3A to state N3 based on the self-awareness information ((1) "PRESSING IS NOT BEING PERFORMED WITH STRONG FORCE") and the work state information ((2) "STRONG FORCE IS NOT BEING APPLIED") that is the analysis result of analysis unit 112. Information determination unit 114 determines the third work instruction content group corresponding to state N3, and determines work instruction content D3 ("DO NOT PRESS SCREWDRIVER WITH STRONG FORCE") of the third work instruction content group. Information presentation unit 115 presents the determined work instruction content D3 to the worker as information on the next work instruction.

When the state is state N3B, information determination unit 114 maintains state N3B based on the self-awareness information ((1) "PRESSING IS BEING PERFORMED WITH STRONG FORCE") and the work state information ((2) "STRONG FORCE IS NOT BEING APPLIED") that is the analysis result of analysis unit 112. Information determination unit 114 determines the third work instruction content group corresponding to state N3B, and determines work instruction content D3b ("PRESSING WAS NOT PERFORMED WITH STRONG FORCE IN PREVIOUS WORK. WORK IN SAME WAY") of the third work instruction content group. Information presentation unit 115 presents the determined work instruction content D3b to the worker as information on the next work instruction. When the state is state N3B, information determination unit 114 causes transition from state N3B to state N3A based on the self-awareness information ((1) "PRESSING IS BEING PERFORMED WITH STRONG FORCE" or "PRESSING IS NOT BEING PERFORMED WITH STRONG FORCE") and the work state information ((2) "STRONG FORCE IS BEING APPLIED") that is the analysis result of analysis unit 112. Information determination unit 114 determines the third work instruction content group corresponding to state N3A, and determines work instruction content D3a ("HOLD SCREWDRIVER WITH THUMB AND MIDDLE FINGER AND PRESS IT") of the third work instruction content group. Information presentation unit 115 presents the determined work instruction content D3a to the worker as information on the next work instruction.

When the state is state N3B, information determination unit 114 causes transition from state N3B to state N3 based on the self-awareness information ((1) "PRESSING IS NOT BEING PERFORMED WITH STRONG FORCE") and the work state information ((2) "STRONG FORCE IS NOT BEING APPLIED") that is the analysis result of analysis unit 112. Information determination unit 114 determines the third work instruction content group corresponding to state N3, and determines work instruction content D3 ("DO NOT PRESS SCREWDRIVER WITH STRONG FORCE") of the third work instruction content group. Information presentation unit 115 presents the determined work instruction content D3 to the worker as information on the next work instruction.

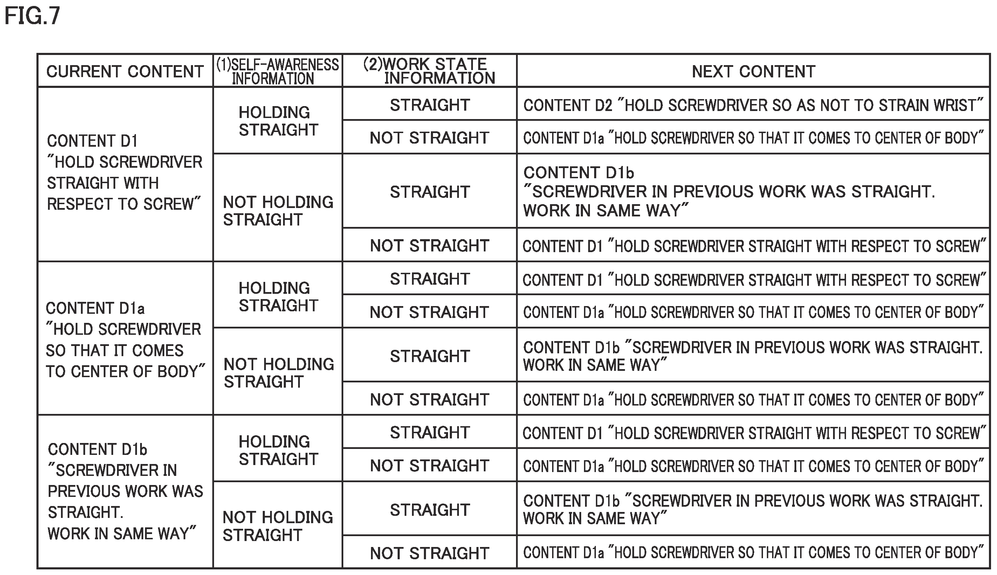

Fig. 7 is a diagram illustrating determination of work instruction content of the first work instruction content group according to the embodiment. Referring to Fig. 7, information on the next work instruction is determined based on (1) self-awareness information ("HOLDING STRAIGHT" or "NOT HOLDING STRAIGHT") and (2) work state information ("STRAIGHT" or "NOT STRAIGHT").

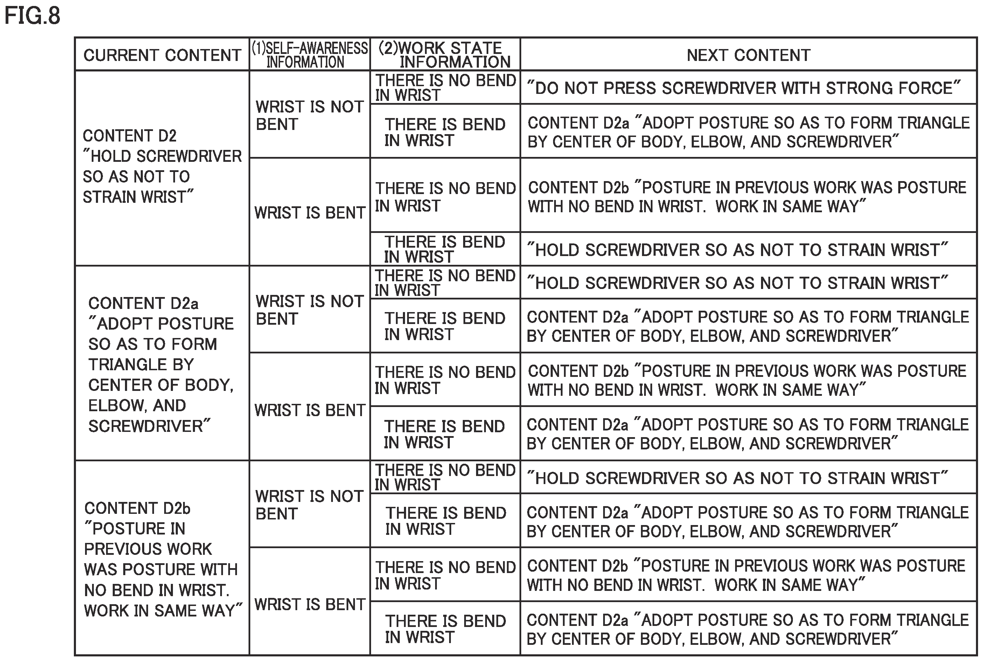

Fig. 8 is a diagram illustrating determination of work instruction content of the second work instruction content group according to the embodiment. Referring to Fig. 8, information on the next work instruction is determined based on (1) self-awareness information ("WRIST IS BENT" or "WRIST IS NOT BENT") and (2) work state information ("THERE IS NO BEND IN WRIST" or "THERE IS BEND IN WRIST").

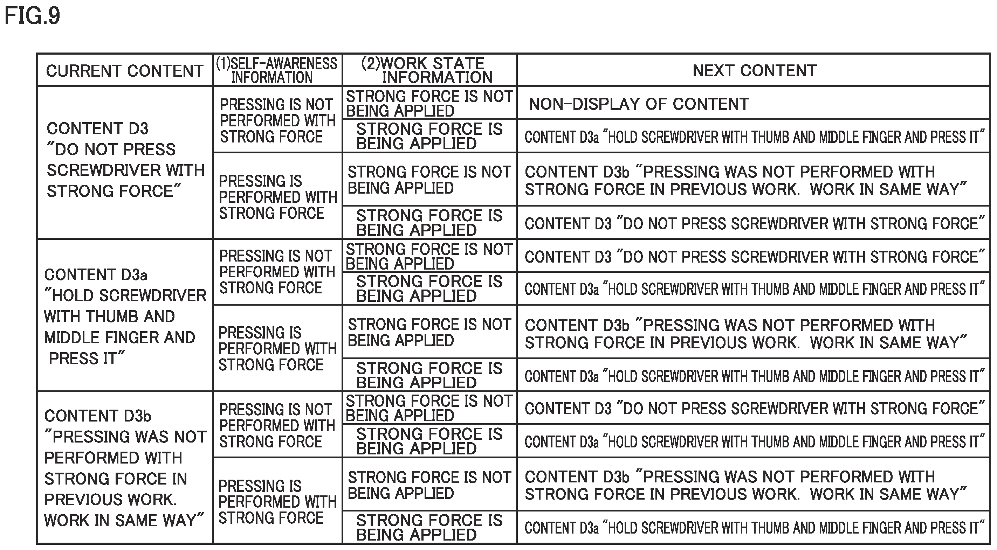

Fig. 9 is a diagram illustrating determination of work instruction content of the third work instruction content group according to the embodiment. Referring to Fig. 9, information on the next work instruction is determined based on (1) self-awareness information ("PRESSING IS BEING PERFORMED WITH STRONG FORCE" or "PRESSING IS NOT BEING PERFORMED WITH STRONG FORCE") and (2) work state information (" STRONG FORCE IS NOT BEING APPLIED" or "STRONG FORCE IS BEING APPLIED").

This example has described a case where the first to third work instruction content groups are provided, but a configuration in which another work instruction content group is further provided may be adopted. Alternatively, only one work instruction content group may be provided.

In this example, since the information on the work instruction in the work procedure of the work of the worker is determined based on the self-awareness information regarding the work of the worker, the work instruction regarding the work can be provided according to the situation of the worker. For example, when appropriate work is actually being performed although the self-awareness information of the worker indicates that appropriate work is not being performed, by presenting that actual work is being performed, the work instruction for the worker to continuously perform the work with confidence can be presented according to the situation of the worker. For example, when appropriate work is not actually being performed although the self-awareness information of the worker indicates that appropriate work is being performed, by presenting another work instruction so that appropriate work can be performed, the work instruction for the worker to appropriately perform the work can be presented according to the situation of the worker.

This example has described a case where the self-awareness information (work is appropriate or work is inappropriate) of the worker is transmitted to server 20 via input device 50 by way of example, but the present disclosure is not limited thereto. The self-awareness information (work instruction is understood or work instruction is not understood) of the worker regarding understanding of the contents of the work instruction may be transmitted to server 20. For example, when the self-awareness information of the worker indicates that the work instruction cannot be understood, by changing the work instruction so that the work instruction can be understood, the work instruction can be presented so that the worker continues the work with confidence according to the situation of the worker. For example, when appropriate work is not actually being performed although the self-awareness information of the worker indicates that the work instruction can be understood, by presenting another work instruction so that appropriate work can be performed, the work instruction for the worker to appropriately perform the work can be presented according to the situation of the worker.

This example has described a case where two switches are provided in input device 50 to classify the self-awareness information of the worker into two by way of example. Specifically, this example has described a case where the self-awareness information is classified into work being appropriate or work being inappropriate, but the present disclosure is not limited thereto. A higher number of switches may be provided and the self-awareness information of the worker may be classified into a plurality of patterns, and information on a work instruction in a work procedure of work of the worker may be determined based on the work state information for the work instruction of the worker, which is the analysis result of analysis unit 112, and the self-awareness information regarding the work of the worker.

This example has described a configuration in which switches selectively pressed by the worker are provided as an example of input device 50, but the self-awareness information may be received using a keyboard or any other input device without being limited to switches. For example, a microphone may be used as input device 50. For example, voice input via a microphone may be performed to acquire the self-awareness information of the worker.

This example has described a scheme for determining whether or not the screwdriver is held straight with respect to the screw and whether or not the screwdriver is pressed with a strong force using tilt sensor 16 and pressure sensor 15 of screwdriver DR, but the present disclosure is not limited thereto. Any other scheme may be used for the above determination. For example, the image data from camera 30 may be analyzed to determine whether or not the screwdriver is held straight with respect to the screw to generate the work state information. In addition, similarly, the image data from camera 30 may be analyzed to determine whether or not the screwdriver is pressed with a strong force and generate the work state information.

This example has described a scheme of analyzing the work information by analysis unit 112 to generate the work state information of the worker, but the present disclosure is not limited thereto, and a scheme for inputting the work state information from the outside may be adopted. For example, a manager of the worker may observe work following the work instruction of the worker, and the work state information based on the observation of the manager may be input to server 20. For example, input device 50 for the manager may be provided to input the work state information ("STRAIGHT" or "NOT STRAIGHT") to server 20.

Although the embodiment of the present invention has been described, it should be understood that the embodiment disclosed herein is illustrative and non-restrictive in every respect. The technical scope of the present invention is defined by the scope of the claims, and is intended to include any modifications within the meaning and scope equivalent to the terms of the claims.

### REFERENCE SIGNS LIST

1 work assistance system; 10 projector; 15 pressure sensor; 16 tilt sensor; 20 server; 30 camera; 50 input device; 101 processor; 102 memory; 103 storage; 104 display controller; 105 input interface; 106 communication interface; 110 work information acquisition unit; 111 self-awareness information acquisition unit; 112 analysis unit; 114 information determination unit; 115 information presentation unit; 131 work assistance program; 132 work information; 133 content information.

## Claims

1. A work assistance device comprising:
an information determination unit that determines information on a work instruction in a work procedure of work of a worker based on work state information for the work instruction of the worker and self-awareness information regarding the work of the worker; and
an information presentation unit that presents the information on the work instruction determined by the information determination unit.

2. The work assistance device according to claim 1, further comprising:
a work information acquisition unit that acquires work information of the worker; and
an analysis unit that analyzes the work information of the worker acquired by the work information acquisition unit to generate work state information.

3. The work assistance device according to claim 1, further comprising a self-awareness information acquisition unit that acquires the self-awareness information regarding the work of the worker.

4. The work assistance device according to claim 1, comprising an information storage unit that stores a plurality of work instruction contents that are the information on the work instruction, wherein
the plurality of work instruction contents are classified into a plurality of work instruction content groups, and
the information determination unit determines one of the plurality of work instruction content groups based on the work state information and the self-awareness information, and determines one of the plurality of work instruction contents in the determined work instruction content group.

5. The work assistance device according to claim 1, further comprising an information reception unit that receives input of the self-awareness information of the worker.

6. The work assistance device according to claim 5, wherein the self-awareness information of the worker is information regarding whether or not the work instruction is understood.

7. The work assistance device according to claim 5, wherein the self-awareness information of the worker is information regarding whether or not work following the work instruction is appropriate.

8. A work assistance method comprising:
determining information on a work instruction in a work procedure of work of a worker based on work state information for the work instruction of the worker and self-awareness information regarding the work of the worker; and
presenting the determined information on the work instruction.

9. A work assistance program for causing a computer to perform a work assistance method, the work assistance method comprising:
determining information on a work instruction in a work procedure of work of a worker based on work state information for the work instruction of the worker and self-awareness information regarding the work of the worker; and
presenting the determined information on the work instruction.
